(19) Europäisches Patentamt
European Patent Office
Office européen des brevets

(11) **EP 2 908 203 B1**

(12) **EUROPEAN PATENT SPECIFICATION**

(45) Date of publication and mention
of the grant of the patent:
**27.03.2019   Bulletin 2019/13**

(51) Int Cl.:
*G06Q 50/30* (2012.01)          *G06Q 10/06* (2012.01)
*G05D 1/10* (2006.01)          *G05D 1/00* (2006.01)

(21) Application number: **15154892.2**

(22) Date of filing: **12.02.2015**

(54) **Unmanned vehicle (UV) movement and data control system**

System zur Steuerung der Bewegung und Verwaltung der Daten eines unbemannten Fahrzeugs

Système de commande et de gestion des données d'un Véhicule sans pilote (UV)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2014   US 201461940251 P
21.02.2014   US 201461943224 P
11.02.2015   US 201514619854
11.02.2015   US 201514619749**

(43) Date of publication of application:
**19.08.2015   Bulletin 2015/34**

(73) Proprietor: **Accenture Global Services Limited
Dublin 4 (IE)**

(72) Inventors:
• **Mullan, Pramila**
**Los Gatos, CA California 95032 (US)**
• **Mui, Michael**
**San Francisco, CA 94105 (US)**
• **Fenney, Robert**
**San Francisco, CA 94105 (US)**

(74) Representative: **Müller-Boré & Partner
Patentanwälte PartG mbB
Friedenheimer Brücke 21
80639 München (DE)**

(56) References cited:
EP-A2- 2 333 479          US-A1- 2009 222 148
US-A1- 2011 019 558          US-B1- 7 912 633

**Description**

CROSS-REFERENCE TO RELATED APPLICATION(S)

This application claims priority to U.S. provisional patent application serial number 61/940,251, filed February 14, 2014, entitled "Unmanned Business Operations Platform", U.S. provisional patent application serial number 61/943,224, filed February 21, 2014, entitled "Unmanned Business Operations Platform", and further relates to commonly assigned and co-pending U.S. non-provisional patent application serial number 14/619,854, entitled "Unmanned Vehicle (UV) Control System", filed on February 11, 2015, and to the European application entitled "Unmanned Vehicle (UV) Control System", filed on February 12, 2015 (Attorney Reference Number A 7809 - hy).

BACKGROUND

Unmanned vehicles (UVs) such as aerial vehicles (e.g., Unmanned aerial vehicles (UAVs), or drones), land vehicles, or even collaborative robots are typically operated without a human aboard. UVs may include three types of platforms based on their ability to control their operation. For example, UVs may be categorized as remote controlled (RC), task following, and semi to fully autonomous.

RC platform based UVs typically do not include the capability to control the UV behavior, and rely on an external operator to perform tasks. For example, a RC platform based UV may be instructed by an operator who has a line-of-sight to the UV to implement every behavior change, and to guide the UV through each task that is to be performed.

A task following platform based UV may include the ability to receive instructions on how to perform a task, and then repeat the task until receiving instructions to stop performing the task, or based on the occurrence of an exception that the UV has been preprogrammed to respond to. An operator for a task following platform based UV may monitor the status of the UV, and then report the results of the task following platform based UV's execution. Task following platform based UVs may be operated without a line-of-sight to the UV, even when the UV is being manually controlled by an operator. For example, a video camera mounted on the UV and a wireless video link (e.g., a "first-person-view", or FPV) may allow an operator to control the UV without line of site.

A semi or fully autonomous platform (e.g., "smart platform") based UV may receive instructions related to a task. Based on access to real-time sensor data on the UV and a set of objectives that are specified by the instructions, the semi or fully autonomous platform based UV may be deployed to follow the instructions.

EP 2 333 479 A2 relates to a vehicle which comprises a platform, a propulsion system, a communications system, a sensor system, and a computer system. The propulsion system, communications system, sensor system, and computer system are associated with the platform. The propulsion system is configured to move the platform on a ground. The communications system is configured to establish a wireless communications link to a remote location. The sensor system is configured to generate sensor data. The computer system is configured to run a number of control processes to perform a mission and configured to perform operations in response to a number of commands from the number of operators if the number of requests is valid.

SUMMARY

It is an object of the invention to enable an UV to perform missions in more environments, and to provide more data to be utilized.

This object is solved according to the invention by the features of the independent claims. Particular embodiments are subject of the dependent claims.

BRIEF DESCRIPTION OF DRAWINGS

Features of the present disclosure are illustrated by way of examples shown in the following figures. In the following figures, like numerals indicate like elements, in which:

Figure 1 illustrates a detailed architecture of a UV movement and data control system, according to an example of the present disclosure;

Figure 2 illustrates a logic diagram of components of UV movement and data control system of Figure 1 for event detection, according to an example of the present disclosure;

Figure 3 illustrates a method for UV movement and data control, according to an example of the present disclosure;

Figure 4 illustrates further details of the method for UV movement and data control, according to an example of the present disclosure; and

Figure 5 illustrates a computer system, according to an example of the present disclosure.

DETAILED DESCRIPTION

Unmanned vehicles (UVs) such as aerial vehicles (e.g., Unmanned aerial vehicles (UAVs), or drones), land vehicles, or even collaborative robots are typically operated without a human aboard. With improvements in sensors, data analytics capabilities, and programmatic mechanization components, UVs may be used in a variety of ambiguous environments, and for performance of a variety of ambiguous tasks. For example, UVs may be used for package delivery, agriculture, emergency services, pipeline inspection, etc. However, integration of UVs in a workflow involving such areas is limited.

According to examples, a UV movement and data control system and a method for UV movement and data control are disclosed herein. The system and method disclosed herein may generally utilize a hardware implemented mission manager and a hardware implemented event detector to assign and manage a mission. The mission manager may maintain knowledge of a fleet of UVs, sensors, and crew, as well as information regarding mission status. A hardware implemented fleet and mission operations controller may operate in conjunction with the mission manager to assign UVs, sensors, and crew to a mission request, identify a movement plan (e.g., a flight plan for a UAV), and an objective for the mission. Once the mission is launched, the event detector may analyze communication data received during the mission, and generate alarms to the mission manager when events that may result in potential problems are detected. The fleet and mission operations controller may operate in conjunction with the mission manager to modify the UV movement plan, and adjust, in real-time, movement plans of the UV based on the events.

A mission request may identify, for example, an operation for a UV, a type of a UV to complete the operation, at least one type of sensor to be mounted on the UV, UV operation crew, a movement plan, and/or an objective for the mission. For example, a mission request may indicate that a fixed wing UAV or quadcopter (i.e., types of UAVs) may be equipped with a video camera, a gas detector, an infrared (IR) camera, and/or a pressure sensor to detect leaks in an oil pipeline.

After launching the mission, the UV may follow the movement plan autonomously, or with varying degrees of remote operator guidance from a hardware implemented movement planning controller operated by an operations crew. Sensors mounted onto the UV may transmit data in real-time to a ground station on the field, such as a portable device with a hardware implemented UV data receiver, and the ground station may transmit the data to the event detector, which may be disposed off-site.

The UV data receiver may include a hardware implemented telemetry data analyzer to buffer predetermined message format, such as a JavaScript Object Notation (JSON) format, UV movement and status messages that are sent to a hardware implemented data integrator of the event detector. The UV data receiver may include a hardware implemented stream data analyzer to receive unformatted data streams from multiple data sources (e.g., video, thermal, near infrared (NIR), multispectral, etc.), and forward the data streams to the data integrator for pre-processing (i.e., synchronization by frames tagged with time and location) and further analytics processing.

The data integrator, which may be implemented as a component of the event detector or separately from the event detector, may include a hardware implemented time and location service (TLS) analyzer and a hardware implemented stream integrator. The TLS analyzer may receive status messages from the telemetry data analyzer, and maintain a model of a current state of the UV while it is performing a mission (e.g., in flight for a UAV). The stream integrator may receive a stream of data from the stream data analyzer, extract frames of data from the stream, retrieve time and location information from the TLS analyzer to insert into the each frame's metadata, and create time and location correlated frames.

A data analyzer of the event detector may process the data to identify an event. When an event is identified, the data analyzer may transmit an alarm to the fleet and mission operations controller for further review by a mission operator. The alarm may include information such as an identification of the event, data associated with the event, a location of the event, etc. After reviewing the event, the mission manager may operate in conjunction with the fleet and mission operations controller to generate instructions in real-time with an updated movement plan for a UV operator.

The system and method disclosed herein may be used in a variety of environments and for a variety of purposes. For example, the system and method disclosed herein may be used to monitor a pipeline in the oil and gas industry. In the oil and gas industry, the system and method disclosed herein may be used in other scenarios, including other types of exploration (e.g., site survey, site drilling, etc.), development (e.g., pad placement, facility rendering, capital project, surveillance, etc.), production (e.g., flare/vent inspection, oil sheen detection, disaster prevention, etc.), manufacturing (flute/chimney inspection, tank/gas inspection, gas detection, etc.), and transportation (e.g., right of way monitoring, theft monitoring, etc.).

The system and method disclosed herein may be used in package delivery (e.g., food, medicine, equipment, etc.), aerial surveillance (e.g., police/fire department, cartography, photography, film, journalism, real estate, etc.), exploration (e.g., mine detection, site survey, etc.), research (e.g., wildlife, atmosphere, ocean, etc.), remote sensing (e.g., telecommunications, weather, maritime, construction, etc.), disaster relief (e.g., survivors, explore contaminated areas, etc.), environment (e.g., forest fires, threats, etc.), and agriculture (e.g., spray pesticides, crop growth, disease, irrigation level, wild animals, etc.).

The system and method disclosed herein may be used for scheduling of predictive maintenance to provide asset inspection, diagnostics, repair, and maintenance work. Further, the system and method disclosed herein may be used, for example, to identify and schedule environmental (e.g., terrain, vegetation, etc.) management. The system and method disclosed herein may also provide for enhancements in safety and environmental protection related to the various activities described herein. For example, with respect to the oil and gas industry, the system and method disclosed herein may be used to protect assets from sabotage, illegal tapping, and terrorist actions in an efficient and economical manner.

The system and method disclosed herein may be used to analyze data from a UV to determine tasks that may be both electronically and mechanically automated in a workflow, and to identify insights that may be obtained from the data. These insights may be used to drive operational decisions, such as shortening lead time to problem detection, or predictive maintenance with pipelines, for example, in the oil and gas industry. The system and method disclosed herein may provide for the reduction of exposure to hazardous environments, increase efficiency and effectiveness with respect to UV movement and data control, and optimize operations.

Generally, the system and method disclosed herein may be envisioned in a broad range of applications where drones or UVs may be used to reduce cost, increase safety, and increase productivity.

The system and method disclosed herein may account for aspects related to the state of UV technology, regulation and compliance, readiness, and safety and privacy. With respect to UV technology, the system and method disclosed herein may provide the hardware and software platform and setup for UV movement and data control. The system and method disclosed herein may also provide for implementation of aspects such as optimal movement planning operations and life cycle management, selection of specialized sensors, direct data transmission from a UV, UV infrastructure and availability management, task distribution among multiple UVs, and reprioritization of UV objectives. With respect to security, safety, and regulations, the system and method disclosed herein may provide for constraints based on local regulations and certification, UV certification and operator training, requirements regarding reporting of incidents to authorities, obstacle avoidance, authentication and authorization of missions, ensuring that a mission has not been compromised or sabotaged, and protection against misuse. The system and method disclosed herein may also provide for secure transmission of data from the event detector that may be implemented in a cloud environment, end-to-end process integration, analytics requirements based on vertical industry, data storage and security, defining business rules, and redefining workflows to incorporate use of the UVs and availability of new insights into related processes.

For the system and method disclosed herein, the fleet and mission operations controller may perform various tasks, such as, specification of mission objectives and routes, scheduling of missions, assignment of a mission operator and assistant, assignment of UV equipment, monitoring of missions in progress, making adjustments to mission requirements.

For the system and method disclosed herein, the movement planning controller may plan and execute a mission. Further, the movement planning controller may monitor the FPV to ensure that mission objectives are being met, and adjust mission routes as needed.

For the system and method disclosed herein, a hardware implemented mission planning controller may manage, for example, a camera gimbal and a video camera, and monitor video capture to ensure quality.

According to examples disclosed herein, the UV movement and data control system may include a hardware implemented mission controller that is executed by at least one hardware processor to control a UV according to a movement plan. A hardware implemented telemetry data analyzer that is executed by the at least one hardware processor may receive, from the mission controller, formatted movement and status metadata from at least one sensor of the UV during movement of the UV according to the movement plan. The hardware implemented telemetry data analyzer may buffer the movement and status metadata for forwarding to a hardware implemented data integrator. According to an example, the movement and status metadata may include time and location information for the UV during the movement of the UV according to the movement plan. A hardware implemented stream data analyzer that is executed by the at least one hardware processor may receive an unformatted data stream from the at least one sensor of the UV. The data integrator that is executed by the at least one hardware processor may inject the time and location information into metadata of the unformatted data stream to generate a time and location correlated (TLC) stream. A hardware implemented TLC stream data analyzer that is executed by the at least one hardware processor may analyze the TLC stream to identify an event related to the UV. A hardware implemented event orchestrator that is executed by the at least one hardware processor may generate a notification related to the event.

According to an example, the mission controller may convert the movement and status metadata to a predetermined message format, such as a JSON format, for processing by the data integrator.

According to an example, the data integrator may include a hardware implemented time and location service analyzer that is executed by the at least one hardware processor to generate, based on the movement and status metadata, a model of a state of the UV during the movement of the UV according to the movement plan.

According to an example, the data integrator may include a hardware implemented stream integrator that is executed by the at least one hardware processor to extract frames of data from the unformatted data stream, retrieve the time and location information from the model of the state of the UV, and inject the time and location information into the metadata of each of the frames of the data from the unformatted data stream to generate TLC frames. A collection of the TLC frames may represent the TLC stream.

According to an example, the stream integrator may extract a frame of data from the unformatted data stream, and pre-process the data from the unformatted data stream for detecting a leak in a pipeline by passing the frame of the data through hue-saturation-value (HSV) based clustering to segment environment into distinct color patches. The leak in the pipeline may be detected by using a transform to extract the pipeline spanning the frame.

According to an example, the TLC stream data analyzer may utilize a histogram-based sliding window to identify pixels of interest in the frame of the data.

According to an example, the TLC stream data analyzer may utilize Teh-Chin chain approximation to extract a blob that represents the leak in the pipeline.

According to an example, the TLC stream data analyzer may utilize a naive-Bayes classifier to classify the blob as a leak or not a leak.

According to an example, the TLC stream data analyzer may retain the classification of the blob based on corroboration of the classification with a plurality of frames of the data including the frame of the data.

According to an example, the TLC stream data analyzer may include a hardware implemented stream processing unit (SPU) including a plurality of hardware implemented event analyzers that are executed by the at least one hardware processor to analyze the TLC stream to identify the event related to the UV.

The UV movement and data control system and the method for UV movement and data control disclosed herein provide a technical solution to technical problems related, for example, to UV movement and data control. The system and method disclosed herein provide the technical solution of a hardware implemented mission controller that is executed by at least one hardware processor to control a UV according to a movement plan. A hardware implemented telemetry data analyzer that is executed by the at least one hardware processor may receive, from the mission controller, formatted movement and status metadata from at least one sensor of the UV during movement of the UV according to the movement plan. The hardware implemented telemetry data analyzer may buffer the movement and status metadata for forwarding to a hardware implemented data integrator. The movement and status metadata may include time and location information for the UV during the movement of the UV according to the movement plan. A hardware implemented stream data analyzer that is executed by the at least one hardware processor may receive an unformatted data stream from the at least one sensor of the UV. The data integrator that is executed by the at least one hardware processor may inject the time and location information into metadata of the unformatted data stream to generate a time and location correlated (TLC) stream. A hardware implemented TLC stream data analyzer that is executed by the at least one hardware processor may analyze the TLC stream to identify an event related to the UV. A hardware implemented event orchestrator that is executed by the at least one hardware processor may generate a notification related to the event.

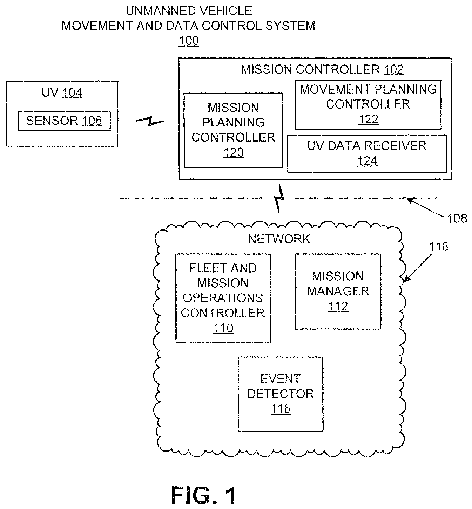

Figure 1 illustrates a detailed architecture of a UV movement and data control system 100, according to an example of the present disclosure. The UV movement and data control system 100 may include a hardware implemented mission controller 102 that is to perform various operations related, for example, to mission planning, movement planning, and receiving of data from a UV 104. The UV 104 may include a plurality of UVs. The UV 104 may include a sensor 106. The sensor 106 may include a plurality of sensors. The UV 104 may encompass all types of UVs, including a variety of aerial, land, space, and marine UVs. The UV 104 may take off (e.g., for an aerial UV), navigate, capture data, transmit collected data, return, and land without human interaction.

The sensor 106 may gather data associated with a mission. The sensor 106 may include a variety of types of sensors that may be categorized as sight sensors, sound sensors, touch sensors, smell sensors, position sensors, external communication sensors, and other (e.g., miscellaneous sensors). The sight sensors may include sensors for ascertaining light intensity, color, distance (e.g., by infrared (IR), measuring angle of light bounce), video capture, rotation (e.g., optical encoders), and/or light signal read (e.g., infrared codes). The sound sensors may include sensors (e.g., a microphone) for ascertaining volume (e.g., decibel meter), frequency measurement, and/or distance (e.g., sonar, measuring time to echo). The touch sensors may include sensors for ascertaining position awareness (e.g., collision alert, contact confirmation, etc.), bend/strain, temperature, and/or pressure (e.g., barometric, grip strength, etc.). The smell sensors may include sensors such as gas sensors, alcohol sensors, etc. The position sensors may include sensors (e.g., accelerometer, digital compass, gyroscope) for ascertaining location (e.g., based on global positioning system (GPS), proximity to a beacon, etc.), and/or tilt. The external communication sensors may include sensors for ascertaining radio communication, and/or IR codes. The miscellaneous sensors may include sensors for ascertaining date and time (e.g., ultra-low frequency (ULF) updates), network communication status, and/or voltage (e.g., low fuei, low battery).

The UV 104 may also include various components for processing, and generating outputs. For example, with respect to processing, the UV 104 may provide for sensor data processing for analog and digital input/output (I/O), kinematics (e.g., position and orientation of objects), proportional-integral-derivative (PID) feedback control, rules application (e.g., if this, do that), navigation (e.g., move to a waypoint), mission execution (e.g., manage multiple waypoints), telemetry management (e.g., summarizing telemetry data), counter, audio/voice processing (e.g., speech to text, text to speech), manage date/time, and data management (e.g., memory, disk, etc.). With respect to processing, the UV 104 may provide for outputs such as movement, motors (e.g., servos, stepper, brushless), hydraulics, pneumatics, gravity release, visual indicators/feedback, LEDs, LCDs, displays, audio indicators/feedback, speaker, buzzer, etc., voltage change (e.g., not in use, go to low power mode), and external communication subsystems (e.g., radio, IR codes).

In the example of Figure 1, the UV 104 and the mission controller 102 may be disposed in a field (e.g., above dashed line 108), whereas the fleet and mission operations controller 110, the mission manager 112, and the event detector 116 may be hosted in an off-site facility (e.g., below the dashed line 108), such as a cloud environment 118. In some examples, the cloud environment 118 may be a data center or another distributed network capable of processing relatively large amounts of data in real time. In other examples, the components of the UV movement and data control system 100 that are located in an off-site facility may be based, for example, on the hardware capabilities of chips installed on the UV 104, a size and power associated with the UV 104, and processing requirements of a mission executed by the UV 104.

With respect to the mission controller 102, the mission planning controller 120 may enable the UV 104 to be programmed to run autonomously. The UV 104 may be equipped with the sensor 106 and intelligence to maintain altitude and a stabilized flight (e.g., for an aerial UV). The sensor 106 may be used to determine the position and altitude of the UV 104 at any given point in time. This enables the UV 104 to navigate between two points according to pre-defined waypoints, without any human interaction during the flight (e.g., for an aerial UV). The mission planning controller 120 may generate a display of the mission details that may be viewed by a UV operation crew (e.g., a pilot and/or assistant).

With respect to the mission controller 102, the movement planning controller 122 may be used to launch the UV 104, and control the UV flight path (e.g., for an aerial UV) and associated sensors. Once the UV 104 begins its movement plan from the launch point, the mission planning controller 120 may communicate with the mission manager 112 to indicate the beginning of the mission. According to an example, the mission controller 102 may be stored on a tablet or another portable device.

The fleet and mission operations controller 110 may analyze a mission request that specifies, for example, a movement time, a movement plan, and equipment (e.g., the specific UV, sensors, and any UV operation crew). The movement plan may include a launch point, predefined way points, alternate rally points, payload requirements, video or other data gathering requirements, payload operation instructions, and/or mission objectives.

The mission manager 112 may maintain information regarding UVs and sensors in inventory. For example, the mission manager 112 may track UVs by type, availability, and an ability to mount particular sensors. The mission manager 112 may also track sensors by type, availability, and ability to be mounted on a particular UV. The mission manager 112 may schedule and assign the mission. Specifically the mission manager 112 may assign the UV 104 (or a plurality of UVs), the sensor 106 (or a plurality of sensors), and any UV operation crew to a location for completing the mission request.

The mission controller 102 may receive the mission request from the mission manager 112, and operate the assigned UV 104 according to the movement plan. The UV 104 may follow the movement plan autonomously or with varying degrees of remote operator guidance from the movement planning controller 122 that may be operated by a UV operation crew.

With respect to the mission controller 102 and the event detector 116, data from the sensor 106 may be received at a UV data receiver 124, and forwarded (e.g., pushed) in real-time to the event detector 116. Alternatively or additionally, data from the sensor 106 may be communicated directly to the event detector 116 based on the placement of hardware associated with the event detector 116 near the edge of the field (e.g., dashed line 108) or within the field.

Generally, the event detector 116 may interpret the data from the sensor 106 in real-time to detect any events or potential problems that warrant further exploration. The event detector 116 may include, for example, event processing, video stream playback, facial recognition, blob detection, and general inspection for the pipeline example described herein. However, those skilled in the art will appreciate in view of this disclosure that the processing capabilities of the event detector 116 may vary depending on the purpose of the mission and the types of sensors that are used for the UV 104.

If an event is detected, the event detector 116 may generate an alert and forward the alert to the fleet and mission operations controller 110. Further, data associated with the event may be displayed in real-time at the fleet and mission operations controller 110. The data associated with the event may be analyzed by the fleet and mission operations controller 110 and the mission manager 112. Based on the analysis of the data, the fleet and mission operations controller 110 may operate in conjunction with the mission manager 112 to communicate to the mission controller 102 a change in movement plan or other further instructions, such as a notification that the mission is complete and an instruction to dismount the sensors from the UV 104 and leave the field.

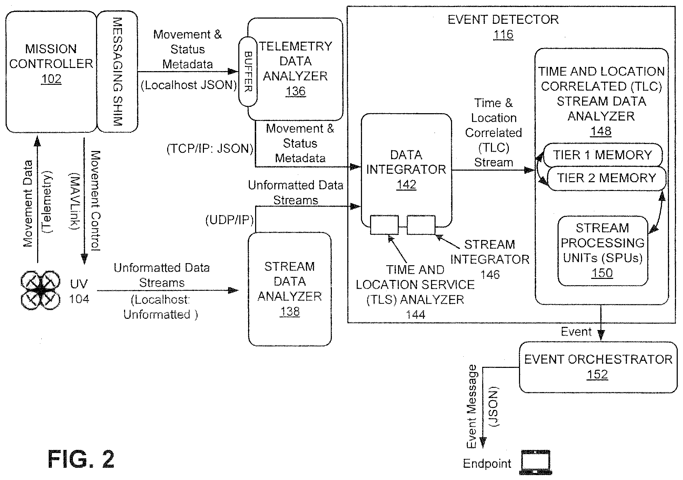

Figure 2 illustrates a logic diagram of components of UV movement and data control system 100 for event detection, according to an example of the present disclosure.

Referring to Figures 1 and 2, the movement planning controller 122 may include any type of movement planner that is used to control and monitor the UV movement in real-time. For a UAV, a flight planner may be used to control and monitor the UV movement in real-time. A fleet management set of machine readable instructions may be used to generate the movement control information during the mission definition process, and forward the information to the movement planning controller 122 that transmits the information to the UV 104 to commence the mission. A custom message shim may be built on top of the movement planner to intercept the movement and status metadata from the UV 104 via a telemetry communications link, and forward the movement and status metadata in a predetermined message format (e.g., a JSON format) to a hardware implemented telemetry data analyzer 136.

The UV data receiver 124 may include the telemetry data analyzer 136 and a hardware implemented stream data analyzer 138, and is used to receive various types of communication data from the UV 104. The communication data may be used, for example, by the event detector 116 to determine events related to an objective of the mission.

Referring to Figure 2, the telemetry data analyzer 136 may buffer UV movement and status messages that are sent to a hardware implemented data integrator 142 of the event detector 116. With respect to the telemetry data analyzer 136, messages may be sent from the movement planning controller 122 (i.e., of the mission controller 102) to the telemetry data analyzer 136 over a Transmission Control Protocol/Internet Protocol (TCP/IP) port on a localhost interface. Further, the telemetry data analyzer 136 may forward the formatted messages to the data integrator 142, for example, over TCP/IP. The telemetry data analyzer 136 may be used to buffer the movement and status messages so the communications latency from sending messages to the data integrator 142 does not slow down or affect operation of the movement planning controller 122.

Referring to Figure 2, the stream data analyzer 138 may receive data streams from multiple data sources (e.g., video, thermal, near infrared (NIR), multispectral, etc.), and forward the data streams to the data integrator 142 for pre-processing (i.e., synchronization by frames tagged with time and location) and further analytics processing. The stream data analyzer 138 may communicate with the data integrator 142 over TCP/IP. With respect to the real-time streaming of the data streams from multiple data sources, the data streams may be processed in real-time, any alerts related to the movement of the UV 104 may be generated in real-time, and the movement plan of the UV 104 may also be modified as needed in real-time.

Referring to Figure 2, the data integrator 142, which may be implemented as a component of the event detector 116 or separately from the event detector 116, may include a hardware implemented time and location service (TLS) analyzer 144 and a hardware implemented stream integrator 146. Generally, the data integrator 142 may receive streams of data, and inject time and location information into the metadata of the streams (i.e., to generate a time and location correlated stream) before forwarding the time and location correlated stream to the time and location correlated (TLC) stream data analyzer 148 for processing. Context may be established using various different streams of data (e.g., video, audio, information tags that may be extracted from other external sources, etc.), and a port may be maintained to monitor receiving streams. Time and location metadata may be extracted from the flight log for a UAV, and each stream may be separated into units (frame for video, segments by time for audio, etc.), and synchronized by time and location upon collection and receipt.

The TLS analyzer 144 of the data integrator 142 may receive status messages (e.g., JSON status messages) from the telemetry data analyzer 136, and maintain a model of a current state of the UV 104 while the UV 104 is performing a mission (e.g., in flight for a UAV). According to an example, the model for the TLS analyzer 144 may include information that includes time and location. For example, with respect to the model for the TLS analyzer 144, the time and location data may be captured and injected into each of the data streams. For example, in the case of video, the time and location data may be captured and injected into each frame of the video data stream. The time and location may be retrieved from GPS information received on the UV 104. The time and location information may be available via a TCP/IP interface. The TCP/IP interface may operate as a request-based interface where a user may open a port to read a line of text, and then close the port after receiving the message. According to an example, the JSON status message may include a JSON format as follows:

{"tls" : ["time" : "HH:MM:SS", "longitude": "32.99999", "latitude": "-123.9999999", "altitude" : "10.3"] }

The TLS analyzer 144 may report the current known time and location for the UV 104 for each request.

The stream integrator 146 of the data integrator 142 may receive a stream of data from the stream data analyzer 138. The stream integrator 146 may publish a port for the stream data analyzer 138 to use in order to push the processed stream data to the stream integrator 146. The stream integrator 146 may extract frames of data from the stream, retrieve time and location information from the TLS analyzer 144 to insert into the each frame's metadata, creating time and location correlated frames. A time and location correlated frame may represent a header packet associated with each packet of data which has the metadata of time and location attached to it, with the associated information being inserted into each packet. The stream integrator 146 may publish the collection of time and location correlated frames as a time and location correlated (TLC) stream or TLC stream to the TLC stream data analyzer 148. For example, if the source data is a MP4 video stream, then the associated MP4 video frame may include metadata which has time, longitude, latitude, and altitude.

Referring to Figure 2, the TLC stream data analyzer 148 of the event detector 116 may process the data to identify an event (e.g., a leak, a blob, etc.). When an event is identified, the TLC stream data analyzer 148 may transmit an alarm to the fleet and mission operations controller 110 for further review by a mission operator. The alarm may include information such as an identification of the event, data associated with the event, a location of the event, etc. After reviewing the event, the mission manager 112 may operate in conjunction with the fleet and mission operations controller 110 to generate instructions in real-time with an updated movement plan for a UV operator.

The TLC stream data analyzer 148 may be organized as a collection of stream processing units (SPUs) 150 each assigned to one or more event analyzers and including access to an associative memory that is shared by all SPUs and an event orchestrator 152. Event analyzers may generally include any type of analyzer to search for an event in a source data stream based on application needs. For example, in the area of oil and gas, an event analyzer may include a leak detection event analyzer, an intruder detection event analyzer, etc. The TLC stream data analyzer 148 may receive a TLC stream, place the TLC stream into its associative memory, and start the SPUs 150. Each SPU may execute all of their event analyzers on the TLC stream, and forward an event to the event orchestrator 152 for all features of interest found in the TLC stream. In this regard, an event may be described as an item of interest, where an alert may be generated based on the presence of an event. Further, a feature may be descried as an attribute, where a plurality of attributes, when correlated together, may function as indicators of the occurrence of an event.

Each SPU may be assigned to one or more event analyzers. Each SPU may have access to an associative memory including one or more TLC streams. When a SPU receives a command from the TLC stream data analyzer 148 to process a TLC stream, the SPU may execute instances of each event analyzer on the assigned TLC stream, and send any results obtained to the event orchestrator 152.

With respect to memory organization, for the TLC stream data analyzer 148, the operating memory that manages the TLC streams may be implemented, for example, in a two-tier structure. The two-tier structure of the operating memory may facilitate scaling with respect to data analysis. For example, based on the two-tier structure of the operating memory, a plurality of event analyzers may be used to analyze the same data source simultaneously. According to an example, Tier 1 may include a file system to store all TLC streams. Tier 2 may include an associative memory that is accessible by all SPUs. The TLC stream data analyzer 148 may load the TLC streams into Tier 2 when the SPUs are to process the streams. When the TLC stream data analyzer 148 determines that all SPUs have processed a stream, the TLC stream data analyzer 148 may remove the stream from the Tier 2 Memory. Event analyzers may also be stored in Tier 2.

With respect to event analyzer management, event analyzers may be stored in both tiers of memory. For example, event analyzers may be stored in Tier 1 and organized as needed. According to an example, active event analyzers may be stored in Tier 2 (accessible by SPUs). Examples of active event analyzers may include event analyzers related to intruder detection, leak detection, etc. Generally, active event analyzers may include event analyzers related to events that a UV operator would like to detect. Event analyzers may be written in any language that may execute on a SPU with the requirement that the event analyzer can access the associative memory and send the correct events to the event orchestrator 152.

The event orchestrator 152 may receive event messages from the SPUs of the TLC stream data analyzer 148. The event orchestrator 152 may format the event messages as needed before forwarding the event messages to preconfigured endpoints. For example, the event orchestrator 152 may receive the event messages and cross-correlate the event messages with other data in order to generate higher level event messages that need further investigation and response. Examples of higher level event messages may include an alarm to a mission operator, and/or a message forwarded to a mission operator for further follow-up or action, and/or the creation of a workflow to deploy maintenance crew, etc. The event messages may be JSON formatted, and may be sent to http-compliant endpoints.

An example implementation of the system 100 for leak detection (e.g., for a pipeline leak) is described with reference to Figures 1 and 2.

At the outset, based on the launch of the UV 104, and control and monitoring by the movement planning controller 122 of the mission controller 102, with respect to pre-processing, using openCV, a streaming video (e.g., 30 fps) may be buffered by the telemetry data analyzer 136 and a visual frame may be extracted for every second and stored using a matrix container. Each frame that is forwarded to the telemetry data analyzer 136 may be buffered for a bit (e.g., to generate a continuous stream), and each frame may be stored within the matrix container. In this case, each pixel may be stored within the matrix container by its color (hue-saturation-value (HSV) value) and position. For example, a matrix container may be formatted as follows:

[(1,212,0) (5,212,0) ... (8,121,33)] n pixels

[(33,225,0) (12,222,3) ... (2, 151, 43)] n pixels

[(21,12,0) (69,52,14) ... (52, 11, 33)] n pixels.

The initial frame may be passed, for example, through an HSV based k-means clustering to segment the environment into distinct color patches. For each similarly colored patch, the mean HSV value may be determined, and the entire patch may be converted to that color, which may facilitate reduction of the color variation. Other clustering techniques, such as hierarchical clustering, agglomerative clustering, and other such techniques may be similarly applied. The HSV based k-means clustering may represent an iterative refinement approach to partition $n$ pixels into k clusters based on HSV values. For leak detection applications traceable to a defined source of leakage, further filtering may be performed on the k-means clustered frame. For example, in order to target leak detection from a pipeline, Hough Line Transform (HLT) may be performed to extract out the pipeline spanning the entire frame, as well as the surrounding clustered patches that define the environment encompassing both the source and the drain of the leakage. Other techniques, such as classifiers may be applied to extract out the pipeline spanning the entire frame. Using the extracted color patches, the position of the color patches relative to the entire frame may be set as the bounded search space for the subsequent steps. Considering the computational complexities of the above clustering and filtering, the clustering and filtering may be performed in an initial set of frames to establish a baseline search area within the future frames. This aspect of establishing a baseline search area within the future frames may provide for reduction of the computational complexity of the above clustering and filtering to limit the search space to areas close to the pipeline which are more likely to include leaks.

Each extracted visual frame may be analyzed by using a histogram-based sliding window that focuses on the occurrence frequency of quantized distribution of component HSV indices. To reduce the computational complexity of evaluating the objective function on the slider over the entire frame (i.e., ($O(n^2(r^2 + H)$)) given a $n \times n$ frame, a $r \times r$ window, and a histogram of dimension $H$ without optimization), the slider may be set to traverse through the bounded search space (i.e., truncated $n$) defined in the pre-processing stage. Within each window that slides through the entire frame, a histogram of all of the detected pixels and their frequencies may be determine to provide a break down by pixel HSV colors. Depending on the nature of the operation, in order to reduce computational intensity and analysis of the entire frame, the space needed to apply the sliding window may be truncated beforehand. For example, based on the assumption that the regions of interest that are to be detected (e.g., for a leak) will be beside a pipeline, other areas that are further away from the pipeline may be truncated and not searched. For the leak material that is being detected, the histograms for a set of training data may be created and normalized. Each window may pick up pixels with a mixture of HSV values (colors). A set of training data (of features that are to be picked up, and their own HSV distribution given the same size window), and a mean of their distribution may be used for comparison against each sliding window's HSV distribution. In this regard, an indicator such as 'positive' may be used to indicate training data that represents what is to be labeled as yes, or classified as true. For example, a leak may include a high frequency of black, dark gray, and brown (with more granularity), and each sliding window's color frequency distribution may be correlated with the training data, meaning that if the sliding window's HSV distribution is inserted instead of the training data, a determination may be made as to whether the distribution is skewed by a certain threshold. If each sliding window's color frequency distribution is indeed correlated with the training data (i.e., each sliding window's color frequency distribution is similar to the training data), the entire sliding window may be highlighted as a potential patch for further analysis. The entire window may be further assigned to a particular color / HSV value that is not in the frame, such that further analysis may include determining patches with that particular color / HSV value to narrow the search space. The bounded search space may be divided into slots (e.g., windows), converted to normalized histograms, and compared to those of the training data using a correlation comparator. An example of the correlation comparator may include CV_COMP_CORREL implemented in openCV's compareHist(h1,h2,CV_COMP_CORREL) process. Slots passing the similarities threshold may be color-coded with a distinct HSV value outside the HSV domain of the frame.

The color-coded frame may be passed through a binary threshold to extract a binary image including only the pixels of interest identified by the histogram-based sliding window. That is, the frame (RGB, color) may be passed through a binary threshold to keep a range of HSV values and filter out the remaining values. For example, an oil leak may be a gradient of black and gray, so that pixels within these HSV values may be retained and other pixels may be filtered out. The sliding window may be used to analyze the entire image, and if there are sufficient pixels in the sliding window that are within an HSV of interest, then the entire window may be retained and set to a predetermined color (e.g., either black or white). The binary image may be passed through the openCV findContour technique that includes, for example, the TEH-CHIN chain approximation event analyzer to extract out the blobs that may represent potential leaks. The binary image (e.g., assuming all of the pixels that are black and gray, potentially representing the oil leak, remain), may be put through the openCV findContour technique to locate potential contours (i.e., continuation of pixels that are the same HSV value). The openCV findContour technique may identify potential outlines within the binary image, and those with close enough circularity, size (depending on the size of a leak) etc., to recognize contours from just random lines. The TEH-CHIN chain approximation technique may include an approximation for contour lines. Other techniques may include CV_CHAIN_APPROX_SIMPLE that compresses horitzontal, vertical, and diagonal segments, and leave only their end points. The positions of the centroids of each blob as well as the parameters of the boundaries may be identified. After applying the openCV findContour technique, certain shapes may be identified and filtered out. In this case, shapes with contours like an oil patch and within each patch may be highlighted, their centroid (i.e., approximate center) position may be identified, and the size of the box that bounds the whole patch may be obtained and stored, representing a potential leak patch.

Each of the extracted blobs (i.e., datum) may be passed through a naïve-Bayes classifier that models a joint distribution over a label $Y = \{1,0\}$, and a set of conditionally independent features $F = \{F_1, F_2, ..., F_n\}$ such as the geometry (e.g., area, circularity, etc.), presence of secondary bounding contours, contextual features (e.g., distance to the pipeline), given the assumption of conditional independence as follows:

$$P(Y, F_1, ..., F_n) = P(Y) \prod_i P(F_i|Y) \qquad \text{Equation (1)}$$

Each datum may be classified by finding the most probable label given the feature values for each pixel using, for example, Bayes Theorem as follows:

$$P(y|f_1, ..., f_n) = \frac{P(y)\prod_{i=1}^{n} P(f_i|y)}{P(f_1, ..., f_n)} \qquad \text{Equation (2)}$$

$$argmax_y P(y|f_1, ..., f_n) = argmax_y \left(\frac{P(y)\prod_{i=1}^{n} P(f_i|y)}{P(f_1, ..., f_n)}\right)$$

$$= argmax_y \left(P(y) \prod_{i=1}^{n} P(f_i|y)\right)$$

Each datum (e.g., a potential patch / blob) that needs to be classified may be put through a classifier. Each pixel within the patch may represent a feature, and the presence of each feature may provide confidence towards each of the labels (e.g., a leak or not a leak). To overcome the issue of underflow, the log probabilities may be used as follows:

$$argmax_y \log P(y|f_i, ..., f_n) = argmax_y \log P(y) \prod_{i=1}^{n} P(f_i|y) = argmax_y [\log(P(y) +$$

$$\sum_{i=1}^{n} \log P(f_i|y))] \qquad \text{Equation (3)}$$

Underflow may occur when the value (number) that is being stored becomes so small that precision is lost during representation and storage of the value in memory (in this case, multiplication of small probabilities together may result in a relatively small value). Laplace smoothing may be used to reduce under-fitting when using empirical observations. The optimal $k$ value for the smoothing may be determined during a validation step that classifies all of the extracted blobs into either a leak or not a leak.

in order to further reduce the probability of picking up noise, potential leak patches that consistently appear in the subsequent frames may be retained. In this regard, when a potential patch has been identified, the same patch may be searched for in the next subsequent frames (until the patch is out of the field of view by taking into account the speed of the UV). Further, the more times the patch appears, the higher the confidence that it is either a leak or not a leak. In order to consider the constant velocity movement of the camera, a KALMAN filter may be used. For the KALMAN filter, with respect to elimination of the static components, foreground extraction (or background filtering) may be omitted. The KF prediction step at each frame may provide an expected region where the detected patch in the current frame should reside in the next frame. The KF may take into account prior information (in this case, the locations of the detected patches), and predict the likely future locations (each time, the KF may predict the locations of the patches in the subsequent frames).

As a first step, with respect to a hash table implementation for the multiframe tracking and matching, when the first potential leak is detected, a key-value pair < *blobID*, {{*pixelPos_1*}, *bool inFrame, bool isTracking, confidence*} > for each detected leak may be inserted into the hash table (O(1)), where *inFrame* is 1 if the leak is found in the frame, else 0, and *isTracking* is 1 if the leak is still being tracked and matched until its KALMAN filter expected position is out of the dimension of the frame (no longer in FOV), else 0. Each detected blob may be stored in a hash table to track whether it is in frame, and being tracked (i.e., stop tracking when out of frame). The KF may predict the detected blob's subsequent position, so that when the KF predicts that the blob will be out of frame, tracking may be terminated.

As a second step, for each of the potential leaks in the hash table, the KALMAN filter may predict their expected pixel positions in the next frame.

As a third step, in the next frame, for each of the potential leaks, if the potential leak is a new potential leak that is not in the hash table, the potential leak may be inserted into the hash table. Further, for each of the potential leaks, if the potential leak is in one of the expected positions predicted by the KALMAN filter in the previous frame, the matching leak may be located in the hash table, and a new pixel position with increased confidence may be inserted into the value for that entry < $blobID$, {$pixelPos_1$, $pixelPos_2$}, 1,1, $confidence + +$>. For leaks in the hash table that are not updated in this iteration, a KALMAN filter predicted position may be inserted into the entry but set inFrame as 0 as follows:

< $blobID$, {$pixelPos_1$, $tmpKFPixelPos_2$}, 0,1, $confidence$ >.

The second and third steps may be repeated, and if an entry is not updated in the previous iteration (inFrame = 0), and is not updated again, the entry (O(1)) may be deleted. In this case, for example, in frame-1, if a blob is detected at (x1,y1), and in frame-2 the KF predicts that the blob will be at (x2, y2), then further search for the blob may continue around (x2, y2) so that the search space may be truncated, thereby reducing computational complexity and power related to blob detection. If the blob is within the region, the location in the hash for that blob may be updated with increased confidence. If the blob is not located, the new predicted location (since sometimes the classifier did not pass it based on imaging conditions such as lighting, angle, etc.) may be updated for that blob in the hash table, but set inFrame = 0 to indicate that the blob is not located. If an entry is not updated in the previous iteration (inFrame = 0), and is not updated again, the entry may be removed (indicating this is not a blob).

After the potential leak is out of the FOV, the corresponding confidence value in the hash table may represent its consistency of being tracked (passing all aforementioned steps) across frames, translating to the confidence of the potential leak being an actual leak.

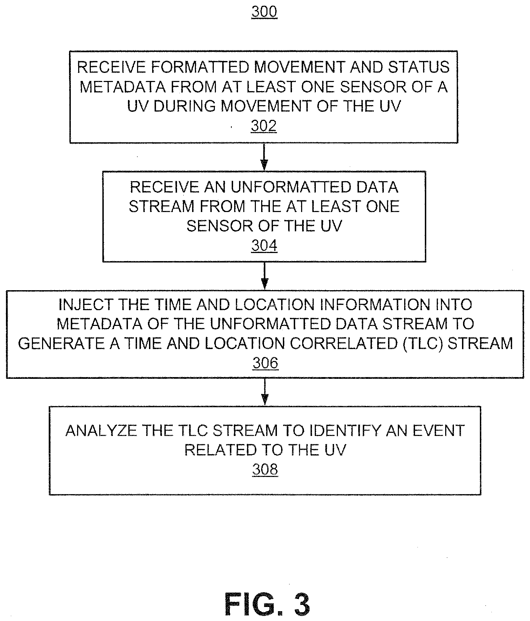

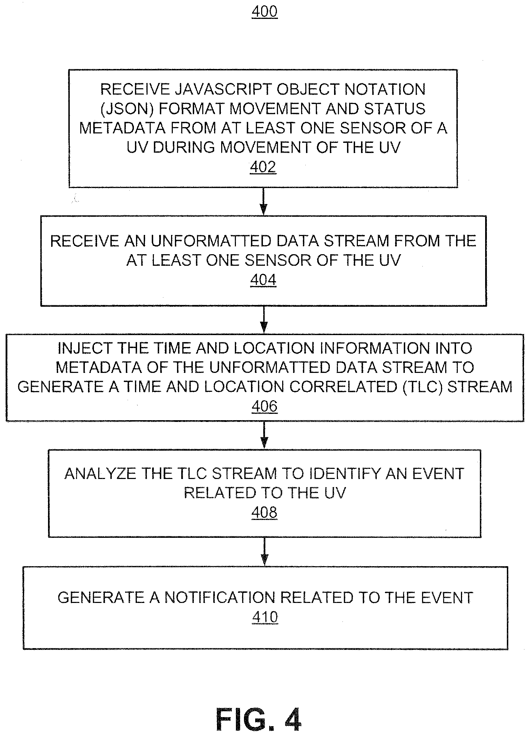

Figures 3 and 4 illustrate flowcharts of methods 300 and 400 for UV movement and data control, according to examples. The methods 300 and 400 may be implemented on the UV movement and data control system 100 described above with reference to Figures 1 and 2 by way of example and not limitation. The methods 300 and 400 may be practiced in other systems.

Referring to Figures 1 and 3, at block 302, the method 300 may include receiving, at a hardware implemented telemetry data analyzer that is executed by at least one hardware processor, formatted movement and status metadata from at least one sensor of a UV during movement of the UV. The movement and status metadata may include time and location information for the UV during the movement of the UV. For example, referring to Figures 1, 2, and 5, the hardware implemented telemetry data analyzer 135 that is executed by at least one hardware processor (e.g., the hardware processor 502) may receive formatted movement and status metadata from at least one sensor 106 of the UV 104 during movement of the UV.

At block 304, the method 300 may include receiving, at a hardware implemented stream data analyzer that is executed by the at least one hardware processor, an unformatted data stream from the at least one sensor of the UV. For example, referring to Figures 1, 2, and 5, the hardware implemented stream data analyzer 138 may receive an unformatted data stream from the at least one sensor 106 of the UV 104.

At block 306, the method 300 may include injecting, by a hardware implemented data integrator that is executed by the at least one hardware processor, the time and location information into metadata of the unformatted data stream to generate a TLC stream. For example, referring to Figures 1, 2, and 5, the hardware implemented data integrator 142 may inject the time and location information into metadata of the unformatted data stream to generate a TLC stream.

At block 308, the method 300 may include analyzing, by a hardware implemented TLC stream data analyzer that is executed by the at least one hardware processor, the TLC stream to identify an event related to the UV. For example, referring to Figures 1, 2, and 5, the hardware implemented TLC stream data analyzer 148 may analyze the TLC stream to identify an event related to the UV 104.

Referring to Figures 1 and 4, at block 402, the method 400 may include receiving, at a hardware implemented telemetry data analyzer that is executed by at least one hardware processor, movement and status metadata from at least one sensor of a UV during movement of the UV. The movement and status metadata may include time and location information for the UV during the movement of the UV. For example, referring to Figures 1, 2, and 5, the hardware implemented telemetry data analyzer 135 may receive movement and status metadata (e.g., JSON format movement and status metadata) from at least one sensor 106 of a UV 104 during movement of the UV 104.

At block 404, the method 400 may include receiving, at a hardware implemented stream data analyzer that is executed by the at least one hardware processor, an unformatted data stream from the at least one sensor of the UV. For example, referring to Figures 1, 2, and 5, the hardware implemented stream data analyzer 138 may receive an unformatted data stream from the at least one sensor 106 of the UV 104.

At block 406, the method 400 may include injecting, by a hardware implemented data integrator that is executed by the at least one hardware processor, the time and location information into metadata of the unformatted data stream to generate a TLC stream. For example, referring to Figures 1, 2, and 5, the hardware implemented data integrator 142 may inject the time and location information into metadata of the unformatted data stream to generate a TLC stream.

At block 408, the method 400 may include analyzing, by a hardware implemented TLC stream data analyzer that is executed by the at least one hardware processor, the TLC stream to identify an event related to the UV. For example, referring to Figures 1, 2, and 5, the hardware implemented TLC stream data analyzer 148 may analyze the TLC stream to identify an event related to the UV.

At block 410, the method 400 may include generating, at a hardware implemented event orchestrator that is executed by the at least one hardware processor, a notification related to the event. For example, referring to Figures 1, 2, and 5, the hardware implemented event orchestrator 152 may generate a notification related to the event.

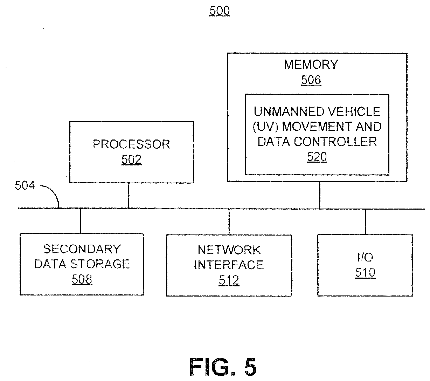

Figure 5 shows a computer system 500 that may be used with the examples described herein. The computer system may represent a generic platform that includes components that may be in a server or another computer system. The computer system 500 may be used as a platform for the system 100. The computer system 500 may execute, by a processor (e.g., a single or multiple processors) or other hardware processing circuit, the methods, functions and other processes described herein. These methods, functions and other processes may be embodied as machine readable instructions stored on a computer readable medium, which may be non-transitory, such as hardware storage devices (e.g., RAM (random access memory), ROM (read only memory), EPROM (erasable, programmable ROM), EEPROM (electrically erasable, programmable ROM), hard drives, and flash memory).

The computer system 500 may include a processor 502 that may implement or execute machine readable instructions performing some or all of the methods, functions and other processes described herein. Commands and data from the processor 502 may be communicated over a communication bus 504. The computer system may also include a main memory 506, such as a random access memory (RAM), where the machine readable instructions and data for the processor 502 may reside during runtime, and a secondary data storage 508, which may be non-volatile and stores machine readable instructions and data. The memory and data storage are examples of computer readable mediums. The memory 506 may include a UV movement and data controller 520 including machine readable instructions residing in the memory 506 during runtime and executed by the processor 502. The UV movement and data controller 520 may include the elements of the system 100 shown in Figure 1.

The computer system 500 may include an I/O device 510, such as a keyboard, a mouse, a display, etc. The computer system may include a network interface 512 for connecting to a network. Other known electronic components may be added or substituted in the computer system.

**Claims**

1.  A unmanned vehicle (UV) movement and data control system (100) comprising:

    a hardware implemented mission controller (102), executed by at least one hardware processor, to control a UV (104) according to a movement plan;
    a hardware implemented telemetry data analyzer (136), executed by the at least one hardware processor, to

    receive, from the mission controller (102), formatted movement and status metadata from at least one sensor of the UV (104) during movement of the UV (104) according to the movement plan,
    buffer the movement and status metadata, and
    forward the movement and status metadata to a hardware implemented data integrator (142), wherein the movement and status metadata includes time and location information for the UV (104) during the movement of the UV (104) according to the movement plan;

    a hardware implemented stream data analyzer (138), executed by the at least one hardware processor, to receive an unformatted data stream from the at least one sensor of the UV (104), **characterized in that**
    the hardware implemented data integrator (142), executed by the at least one hardware processor to inject the time and location information into metadata of the unformatted data stream to generate a time and location correlated (TLC) stream;
    a hardware implemented TLC stream data analyzer (148), executed by the at least one hardware processor, to analyze the TLC stream to identify an event related to the UV (104); and
    a hardware implemented event orchestrator (152), executed by the at least one hardware processor, to generate a notification related to the event;
    the UV is an unmanned aerial vehicle (UAV).

2.  The UV movement and data control system (100) according to claim 1, wherein the mission controller (102) is to convert the movement and status metadata to a JavaScript Object Notation (JSON) format for processing by the data integrator (136); and/or

wherein the at least one sensor includes a video camera, a gas detector, an infrared (IR) camera, and a pressure sensor.

3. The UV movement and data control system (100) according to claims 1 or 2, wherein the data integrator (142) comprises:
a hardware implemented time and location service analyzer (144), executed by the at least one hardware processor, to generate, based on the movement and status metadata, a model of a state of the UV during the movement of the UV (104) according to the movement plan.

4. The UV movement and data control system (100) according to claim 3, wherein the data integrator (142) comprises:
a hardware implemented stream integrator (146), executed by the at least one hardware processor, to:

extract frames of data from the unformatted data stream;
retrieve the time and location information from the model of the state of the UV; and
inject the time and location information into the metadata of each of the frames of the data from the unformatted data stream to generate TLC frames, wherein a collection of the TLC frames represents the TLC stream.

5. The UV movement and data control system (100) according to claim 3, wherein the data integrator (142) comprises:
a hardware implemented stream integrator (146), executed by the at least one hardware processor, to:

extract a frame of data from the unformatted data stream; and
pre-process the data from the unformatted data stream for detecting a leak in a pipeline by passing the frame of the data through hue-saturation-value (HSV) based clustering to segment environment into distinct color patches, wherein the leak in the pipeline is detected by using a transform to extract the pipeline spanning the frame.

6. The UV movement and data control system (100) according to claim 5, wherein the TLC stream data analyzer (148) is to utilize a histogram-based sliding window to identify pixels of interest in the frame of the data.

7. The UV movement and data control system (100) according to claim 5, wherein the TLC stream data analyzer (148) is to utilize Teh-Chin chain approximation to extract a blob that represents the leak in the pipeline; and
wherein preferably the TLC stream data analyzer (148) is to utilize a naïve-Bayes classifier to classify the blob as a leak or not a leak; and
wherein further preferably the TLC stream data analyzer (148) is to retain the classification of the blob based on corroboration of the classification with a plurality of frames of the data including the frame of the data.

8. The UV movement and data control system (100) according to any one of claims 1 to 7, wherein the TLC stream data analyzer (148) further comprises:
a hardware implemented stream processing unit (SPU) (150) including a plurality of hardware implemented event analyzers, executed by the at least one hardware processor, to analyze the TLC stream to identify the event related to the UV (104).

9. The UV movement and data control system (100) according to any one of claims 1 to 8, wherein the UV (104) is an autonomous UV .

10. The UV movement and data control system (100) according to any one of claims 1 to 9, wherein the TLC stream data analyzer (148) is to analyze the TLC stream to identify the event that includes a potential leak or an intruder related to a pipeline.

11. A method (300) for unmanned vehicle (UV) movement and data control, the method comprising:

controlling, by a hardware implemented mission controller (102) that is executed by at least one hardware processor, a UV (104) according to a movement plan;
receiving (302) from the mission controller (102), at a hardware implemented telemetry data analyzer (136) that is executed by the at least one hardware processor, formatted movement and status metadata from at least one sensor of the UV (104) during movement of the UV (104) according to the movement plan,
buffering, by the hardware implemented telemetry data analyzer (136), the movement and status metadata;

forwarding by the hardware implemented telemetry data analyzer (136), the movement and status metadata to a hardware implemented data integrator (142); wherein the movement and status metadata includes time and location information for the UV (104) during the movement of the UV (104) according to the movement plan;

receiving (304), at a hardware implemented stream data analyzer (138) that is executed by the at least one hardware processor, an unformatted data stream from the at least one sensor of the UV (104); **characterized in that**

injecting (306), by the hardware implemented data integrator (142) that is executed by the at least one hardware processor, the time and location information into metadata of the unformatted data stream to generate a time and location correlated (TLC) stream; and

analyzing (308), by a hardware implemented TLC stream data analyzer (148) that is executed by the at least one hardware processor, the TLC stream to identify an event related to the UV (104);

generating, by a hardware implemented event orchestrator (152) that is executed by the at least one hardware processor, a notification related to the event;

wherein the UV is an unmanned aerial vehicle (UAV).

12. The method (300) for UV movement and data control according to claim 11, further comprising:
generating, by a hardware implemented time and location service analyzer (144) that is executed by the at least one hardware processor, based on the movement and status metadata, a model of a state of the UV during the movement of the UV.

13. The method for UV movement and data control according to claims 11 or 12, further comprising:

extracting, by a hardware implemented stream integrator (146) that is executed by the at least one hardware processor, a frame of data from the unformatted data stream; and

pre-processing, by the stream integrator (146), the data from the unformatted data stream to detect a leak in a pipeline by passing the frame of the data through hue-saturation-value (HSV) based clustering to segment environment into distinct color patches, wherein the leak in the pipeline is detected by using a transform to extract the pipeline spanning the frame.

14. The method (300) for UV movement and data control according to any one of claims 11 to 13, further comprising:

utilizing, by the TLC stream data analyzer (148), Teh-Chin chain approximation to extract a blob that represents the leak in the pipeline; and

preferably utilizing, by the TLC stream data analyzer (148), a naïve-Bayes classifier to classify the blob as a leak or not a leak.

15. A non-transitory computer readable medium having stored thereon machine readable instructions for UV movement and data control, the machine readable instructions when executed cause at least one hardware processor to perform operations according to the method of claim 11.

**Patentansprüche**

1. System zur Steuerung bzw. Regelung der Bewegung und Verwaltung von Daten eines unbemannten Fahrzeugs (100), umfassend:

eine als Hardware implementierte Missionssteuerung bzw. -regelung (102), die von mindestens einem Hardware-Prozessor ausgeführt wird, um ein unbemanntes Fahrzeug (104) entsprechend einem Bewegungsplan zu steuern bzw. zu regeln;

einen als Hardware implementierten Telemetriedatenanalysator (136), der von dem mindestens einen Hardware-Prozessor ausgeführt wird, um

von der Missionssteuerung bzw. -regelung (102) formatierte Bewegungs- und Status-Metadaten von mindestens einem Sensor des unbemannten Fahrzeugs (104) während einer Bewegung des unbemannten Fahrzeugs (104) entsprechend dem Bewegungsplan zu empfangen,

die Bewegungs- und Status-Metadaten zu puffern, und

die Bewegungs- und Status-Metadaten an einen als Hardware implementierten Datenintegrator (142) weiterzuleiten, wobei die Bewegungs- und Status-Metadaten Zeit- und

Ortsinformationen für das unbemannte Fahrzeug (104) während der Bewegung des unbemannten Fahrzeugs (104) entsprechend dem Bewegungsplan umfassen;
einen als Hardware implementierten Stream-Datenanalysator (138), der von dem mindestens einen Hardware-Prozessor ausgeführt wird, um einen unformatierten Daten-Stream von dem mindestens einen Sensor des unbemannten Fahrzeugs (104) zu empfangen,

**dadurch gekennzeichnet, dass**

der als Hardware implementierte Datenintegrator (142), der von dem mindestens einen Hardware-Prozessor ausgeführt wird, um die Zeit- und Ortsinformationen in Metadaten des unformatierten Daten-Streams einzufügen, um einen zeit- und ortskorrrelierten Datenstrom (Time and Location Correlated Stream, TLC-Stream) zu erzeugen:

einen als Hardware implementierten TLC-Stream-Datenanalysator (148), der von dem mindestens einen Hardware-Prozessor ausgeführt wird, um den TLC-Stream zu analysieren, um ein das unbemannte Fahrzeug (104) betreffendes Ereignis zu identifizieren; und
einen als Hardware implementierten Ereignisorchestrator (152), der von dem mindestens einen Hardware-Prozessor ausgeführt wird, um eine das Ereignis betreffende Benachrichtigung zu erzeugen;
das unbemannte Fahrzeug ein unbemanntes Fluggerät (eine Drohne) ist.

2. System zur Steuerung bzw. Regelung der Bewegung und Verwaltung von Daten eines unbemannten Fahrzeugs (100) nach Anspruch 1, wobei die Missionssteuerung bzw. - regelung (102) die Bewegungs- und Status-Metadaten in ein JavaScript-Object-Notation-Format (JSON-Format) zur Verarbeitung mittels des Datenintegrators (136) umwandeln soll; und/oder
wobei der mindestens eine Sensor eine Videokamera, einen Gasdetektor, eine Infrarotkamera und einen Drucksensor umfasst.

3. System zur Steuerung bzw. Regelung der Bewegung und Verwaltung von Daten eines unbemannten Fahrzeugs (100) nach Anspruch 1 oder 2, wobei der Datenintegrator (142) Folgendes umfasst:
einen als Hardware implementierten Zeit- und Ortsdienstanalysator (144), der von dem mindestens einen Hardware-Prozessor ausgeführt wird, um basierend auf den Bewegungs- und Status-Metadaten ein Modell eines Zustands des unbemannten Fahrzeugs während der Bewegung des unbemannten Fahrzeugs (104) entsprechend dem Bewegungsplan zu erzeugen.

4. System zur Steuerung bzw. Regelung der Bewegung und Verwaltung von Daten eines unbemannten Fahrzeugs (100) nach Anspruch 3, wobei der Datenintegrator (142) Folgendes umfasst:
einen als Hardware implementierten Stream-Integrator (146), der von dem mindestens einen Hardware-Prozessor ausgeführt wird, um:

Datenübertragungsblöcke von Daten aus dem unformatierten Daten-Stream zu extrahieren; die Zeit- und Ortsinformationen aus dem Modell des Zustands des unbemannten Fahrzeugs wiederherzustellen; und
die Zeit- und Ortsinformationen in die Metadaten von jedem der Datenübertragungsblöcke der Daten aus dem unformatierten Daten-Stream einzufügen, um TLC-Datenübertragungsblöcke zu erzeugen, wobei eine Sammlung der TLC-Datenübertragungsblöcke den TLC-Stream abbildet.

5. System zur Steuerung bzw. Regelung der Bewegung und Verwaltung von Daten eines unbemannten Fahrzeugs (100) nach Anspruch 3, wobei der Datenintegrator (142) Folgendes umfasst:
einen als Hardware implementierten Stream-Integrator (146), der von dem mindestens einen Hardware-Prozessor ausgeführt wird, um:

einen Datenübertragungsblock von Daten aus dem unformatierten Daten-Stream zu extrahieren; und
die Daten aus dem unformatierten Daten-Stream vorzuverarbeiten, um ein Leck in einer Pipeline zu detektieren, indem der Datenübertragungsblock der Daten einem Farbsättigungswert-basierten (Hue Saturation Value, HSV) Clustering unterzogen wird, um eine Umgebung in unterschiedliche Farbflecke zu segmentieren, wobei das Leck in der Pipeline detektiert wird, indem eine Transformation verwendet wird, um die den Datenübertragungsblock umspannende Pipeline zu extrahieren.

6. System zur Steuerung bzw. Regelung der Bewegung und Verwaltung von Daten eines unbemannten Fahrzeugs (100) nach Anspruch 5, wobei der TLC-Stream-Datenanalysator (148) ein histogrammbasiertes verschiebbares Fenster einsetzen soll, um Pixel von Interesse in dem Datenübertragungsblock der Daten zu identifizieren.

**7.** System zur Steuerung bzw. Regelung der Bewegung und Verwaltung von Daten eines unbemannten Fahrzeugs (100) nach Anspruch 5, wobei der TLC-Stream-Datenanalysator (148) eine Teh-Chin-Näherungskette einsetzen soll, um einen Blob zu extrahieren, der das Leck in der Pipeline abbildet; und
wobei der TLC-Stream-Datenanalysator (148) einen naiven Bayes-Klassifikator einsetzen soll, um den Blob als ein Leck oder kein Leck zu klassifizieren; und
wobei überdies vorzugsweise der TLC-Stream-Datenanalysator (148) die Klassifizierung des Blobs basierend auf Bestätigung der Klassifizierung mit einer Vielzahl von Datenübertragungsblöcken der Daten, umfassend den Datenübertragungsblock der Daten, beibehalten soll.

**8.** System zur Steuerung bzw. Regelung der Bewegung und Verwaltung von Daten eines unbemannten Fahrzeugs (100) nach einem beliebigen der Ansprüche 1 bis 7, wobei der TLC-Stream-Datenanalysator (148) überdies Folgendes umfasst:
eine als Hardware implementierte Stream-Verarbeitungseinheit (Stream Processing Unit - SPU) (150), umfassend eine Vielzahl von als Hardware implementierten Ereignisanalysatoren, die von dem mindestens einen Hardware-Prozessor ausgeführt werden, um den TLC-Stream zu analysieren, um das das unbemannte Fahrzeug (104) betreffende Ereignis zu identifizieren.

**9.** System zur Steuerung bzw. Regelung der Bewegung und Verwaltung von Daten eines unbemannten Fahrzeugs (100) nach einem beliebigen der Ansprüche 1 bis 8, wobei das unbemannte Fahrzeug (104) ein autonomes unbemanntes Fahrzeug ist.

**10.** System zur Steuerung bzw. Regelung der Bewegung und Verwaltung von Daten eines unbemannten Fahrzeugs (100) nach einem beliebigen der Ansprüche 1 bis 9, wobei der TLC-Stream-Datenanalysator (148) den TLC-Stream analysieren soll, um das Ereignis zu identifizieren, das ein potenzielles Leck oder einen Eindringling eine Pipeline betreffend umfasst.

**11.** Verfahren (300) zur Steuerung bzw. Regelung der Bewegung und Verwaltung von Daten eines unbemannten Fahrzeugs, wobei das Verfahren Folgendes umfasst:

Steuern bzw. Regeln eines unbemannten Fahrzeugs (104) mittels einer als Hardware implementierten Missionssteuerung bzw. -regelung (102), die von mindestens einem Hardware-Prozessor ausgeführt wird, entsprechend einem Bewegungsplan;
Empfangen (302) von formatierten Bewegungs- und Status-Metadaten von mindestens einem Sensor des unbemannten Fahrzeugs (104) während einer Bewegung des unbemannten Fahrzeugs (104) entsprechend dem Bewegungsplan von der Missionssteuerung bzw. -regelung (102) in einem als Hardware implementierten Telemetriedatenanalysator (136), der von dem mindestens einen Hardware-Prozessor ausgeführt wird,
Puffern der Bewegungs- und Status-Metadaten mittels des als Hardware implementierten Telemetriedatenanalysators (136);
Weiterleiten der Bewegungs- und Status-Metadaten mittels des als Hardware implementierten Telemetriedatenanalysators (136) an einen als Hardware implementierten Datenintegrator (142);
wobei die Bewegungs- und Status-Metadaten Zeit- und Ortsinformationen für das unbemannte Fahrzeug (104) während der Bewegung des unbemannten Fahrzeugs (104) entsprechend dem Bewegungsplan umfassen;
Empfangen (304) eines unformatierten Daten-Streams in einem als Hardware implementierten Stream-Datenanalysators (138), der von dem mindestens einen Hardware-Prozessor ausgeführt wird, von dem mindestens einen Sensor des unbemannten Fahrzeugs (104);
**gekennzeichnet durch**
Einfügen (306) der Zeit- und Ortsinformationen mittels des als Hardware implementierten Datenintegrators (142), der von dem mindestens einen Hardware-Prozessor ausgeführt wird, in Metadaten des unformatierten Daten-Streams, um einen zeit- und ortskorrelierten Datenstrom (TLC-Stream) zu erzeugen; und
Analysieren (308) des TLC-Streams mittels eines als Hardware implementierten TLC-Stream-Datenanalysators (148), der von dem mindestens einen Hardware-Prozessor ausgeführt wird, um ein das unbemannte Fahrzeug (104) betreffendes Ereignis zu identifizieren;
Erzeugen einer das Ereignis betreffenden Benachrichtigung mittels eines als Hardware implementierten Ereignisorchestrators (152), der von dem mindestens einen Hardware-Prozessor ausgeführt wird;
wobei das unbemannte Fahrzeug ein unbemanntes Fluggerät (eine Drohne) ist.

**12.** Verfahren (300) zur Steuerung bzw. Regelung einer Bewegung und Verwaltung der Daten eines unbemannten Fahrzeugs nach Anspruch 11, überdies umfassend:

Erzeugen eines Modells eines Zustands des unbemannten Fahrzeugs während der Bewegung des unbemannten Fahrzeugs mittels eines als Hardware implementierten Zeit- und Ortsdienstanalysators (144), der von dem mindestens einen Hardware-Prozessor ausgeführt wird, basierend auf den Bewegungs- und Status-Metadaten.

**13.** Verfahren zur Steuerung bzw. Regelung der Bewegung und Verwaltung von Daten eines unbemannten Fahrzeugs nach Anspruch 11 oder 12, überdies umfassend:

Extrahieren eines Datenübertragungsblocks von Daten aus dem unformatierten Daten-Stream mittels eines als Hardware implementierten Stream-Integrators (146), der von dem mindestens einen Hardware-Prozessor ausgeführt wird; und
Vorverarbeitung der Daten aus dem unformatierten Daten-Stream mittels des Stream-Integrators (146), um ein Leck in einer Pipeline zu detektieren, indem der Datenübertragungsblock der Daten einem Farbsättigungswert-basierten (HSV) Clustering unterzogen wird, um eine Umgebung in unterschiedene Farbflecke zu segmentieren, wobei das Leck in der Pipeline detektiert wird, indem eine Transformation verwendet wird, um die den Datenübertragungsblock umspannende Pipeline zu extrahieren.

**14.** Verfahren (300) zur Steuerung bzw. Regelung einer Bewegung und Verwaltung von Daten eines unbemannten Fahrzeugs nach einem beliebigen der Ansprüche 11 bis 13, überdies umfassend:

Einsetzen mittels des TLC-Stream-Datenanalysators (148) einer Teh-Chin-Näherungskette, um einen Blob zu extrahieren, der das Leck in der Pipeline abbildet; und
vorzugsweise Einsetzen eines naiven Bayes-Klassifikators mittels des TLC-Stream-Datenanalysators (148), um den Blob als ein Leck oder kein Leck zu klassifizieren.

**15.** Nichtflüchtiges computerlesbares Medium, auf dem maschinenlesbare Anweisungen zur Steuerung bzw. Regelung von Bewegungen und Verwaltung von Daten eines unbemannten Fahrzeugs gespeichert sind, wobei die maschinenlesbaren Anweisungen, wenn sie ausgeführt werden, mindestens einen Hardware-Prozessor veranlassen, Betriebe nach dem Verfahren von Anspruch 11 auszuführen.

## Revendications

**1.** Système de commande de mouvement et de gestion des données d'un véhicule sans pilote (unmanned vehicle - UV) (100) comprenant :

un contrôleur de mission mis en oeuvre par matériel (102), exécuté par au moins un processeur matériel, pour commander un UV (104) selon un plan de mouvement ;
un analyseur de données télémétriques mis en oeuvre par matériel (136), exécuté par le au moins un processeur matériel, pour
recevoir, du contrôleur de mission (102), des métadonnées formatées de mouvement et de statut d'au moins un capteur de l'UV (104) pendant un mouvement de l'UV (104) selon le plan de mouvement,
mettre en mémoire les métadonnées de mouvement et de statut, et
acheminer les métadonnées de mouvement et de statut vers un intégrateur de données mis en oeuvre par matériel (142), dans lequel les métadonnées de mouvement et de statut comprennent des informations de temps et d'emplacement pour l'UV (104) pendant le mouvement de l'UV (104) selon le plan de mouvement ;
un analyseur de données de flux mis en oeuvre par matériel (138), exécuté par le au moins un processeur matériel, pour recevoir un flux de données non formatées du au moins un capteur de l'UV (104), **caractérisé en ce que** l'intégrateur de données mis en oeuvre par matériel (142), exécuté par le au moins un processeur matériel pour injecter des informations de temps et d'emplacement dans les métadonnées du flux de données non formatées pour générer un flux corrélé de temps et d'emplacement (time and location correlated - TLC) ;
un analyseur de données de flux TLC mis en oeuvre par matériel (148), exécuté par le au moins un processeur matériel, pour analyser le flux TLC pour identifier un événement relié à l'UV (104) ; et
un orchestrateur d'événement mis en oeuvre par matériel (152), exécuté par le au moins un processeur matériel, pour générer une notification reliée à l'événement ;
l'UV est un véhicule aérien sans pilote (unmanned aerial vehicle - UAV).

**2.** Système de commande de mouvement et de gestion des données d'un UV (100) selon la revendication 1, dans lequel le contrôleur de mission (102) doit convertir les métadonnées de mouvement et de statut en un format Javascript Object Notation (JSON) pour traitement par l'intégrateur de données (136) ; et/ou
dans lequel le au moins un capteur comprend une caméra vidéo, un détecteur de gaz, une caméra infrarouge (IR)
et un capteur de pression.

3. Système de commande de mouvement et de gestion des données d'un UV (100) selon la revendication 1 ou 2,
dans lequel l'intégrateur de données (142) comprend :
un analyseur de service de temps et d'emplacement mis en oeuvre par matériel (144), exécuté par le au moins un
processeur matériel, pour générer, en fonction des métadonnées de mouvement et de statut, un modèle d'un état
de l'UV pendant le mouvement de l'UV (104) selon le plan de mouvement.

4. Système de commande de mouvement et de gestion des données d'un UV (100) selon la revendication 3, dans
lequel l'intégrateur de données (142) comprend :
un intégrateur de flux mis en oeuvre par matériel (146), exécuté par le au moins un processeur matériel, pour :

extraire des trames de données du flux de données non formatées ;
récupérer des informations de temps et d'emplacement du modèle de l'état de l'UV ; et
injecter les informations de temps et d'emplacement dans les métadonnées de chacune des trames des données
du flux de données non formatées pour générer des trames TLC,
dans lequel une collection de trames TLC représente le flux TLC.

5. Système de commande de mouvement et de gestion des données d'un UV (100) selon la revendication 3, dans
lequel l'intégrateur de données (142) comprend :
un intégrateur de flux mis en oeuvre par matériel (146), exécuté par le au moins un processeur matériel, pour :

extraire une trame de données du flux de données non formatées ; et
prétraiter les données du flux de données non formatées pour détecter une fuite dans un pipeline en passant
la trame des données à travers un regroupement à base de valeurs de saturation de teinte (hue saturation
value - HSV) pour segmenter un environnement en chartes de couleurs distinctes, dans lequel la fuite dans le
pipeline est détectée en utilisant une transformation pour extraire le pipeline couvrant la trame.

6. Système de commande de mouvement et de gestion des données d'un UV (100) selon la revendication 5, dans
lequel l'analyseur de données de flux TLC (148) doit utiliser une fenêtre glissante sur la base d'un histogramme
pour identifier des pixels d'intérêt dans la trame des données.

7. Système de commande de mouvement et de gestion des données d'un UV (100) selon la revendication 5, dans
lequel l'analyseur de données de flux TLC (148) doit utiliser une approximation de la chaîne Teh-Chin pour extraire
une tache qui représente la fuite dans le pipeline ; et
dans lequel, de préférence, l'analyseur de données de flux TLC (148) doit utiliser un classifieur bayésien naïf pour
classer la tache comme une fuite ou non ; et
dans lequel, en outre et de préférence, l'analyseur de données de flux TLC (148) doit retenir la classification de la
tache en fonction d'une corroboration de la classification avec une pluralité de trames des données comprenant la
trame des données.

8. Système de commande de mouvement et de gestion des données d'un UV (100) selon l'une quelconque des
revendications 1 à 7, dans lequel l'analyseur de données du flux TLC (148) comprend en outre :
une unité de traitement de flux (stream processing unit - SPU) mise en oeuvre par matériel (150) comprenant une
pluralité d'analyseurs d'événements mis en oeuvre par matériel, exécutés par le au moins un processeur matériel,
pour analyser le flux TLC pour identifier l'évènement relié à l'UV (104).

9. Système de commande de mouvement et de gestion des données d'un UV (100) selon l'une quelconque des
revendications 1 à 8, dans lequel l'UV (104) est un UV autonome.

10. Système de commande de mouvement et de gestion des données d'un UV (100) selon l'une quelconque des
revendications 1 à 9, dans lequel l'analyseur de données du flux TLC (148) doit analyser le flux TLC pour identifier
l'évènement qui comprend une fuite potentielle ou un intrus relié à un pipeline.

11. Procédé (300) pour une commande de mouvement et une gestion des données d'un véhicule sans pilote (UV), le
procédé consistant à :

commander, par un contrôleur de mission mis en oeuvre par matériel (102) qui est exécuté par au moins un processeur matériel, un UV (104) selon un plan de mouvement ;

recevoir (302) du contrôleur de mission (102), à un analyseur de données télémétriques mis en oeuvre par matériel (136) qui est exécuté par le au moins un processeur matériel, des métadonnées formatées de mouvement et de statut d'au moins un capteur de l'UV (104) pendant un mouvement de l'UV (104) selon le plan de mouvement,

mettre en mémoire, par l'analyseur de données télémétriques mis en oeuvre par matériel (136), les métadonnées de mouvement et de statut ;

acheminer, par l'analyseur de données télémétriques mis en oeuvre par matériel (136), les métadonnées de mouvement et de statut vers un intégrateur de données mis en oeuvre par matériel (142) ; dans lequel les métadonnées de mouvement et de statut comprennent des informations de temps et d'emplacement pour l'UV (104) pendant le mouvement de l'UV (104) selon le plan de mouvement ;

recevoir (304), à un analyseur de données de flux mis en oeuvre par matériel (138) qui est exécuté par le au moins un processeur matériel, un flux de données non formatées du au moins un capteur de l'UV (104) ;

**caractérisé par**

injecter (306), par l'intégrateur de données mis en oeuvre par matériel (142) qui est exécuté par le au moins un processeur matériel, les informations de temps et d'emplacement dans des métadonnées du flux de données non formatées pour générer un flux corrélé de temps et d'emplacement (TLC) ; et

analyser (308), par un analyseur de données de flux TLC mis en oeuvre par matériel (148) qui est exécuté par le au moins un processeur matériel, le flux TLC pour identifier un événement relié à l'UV (104) ;

générer, par un orchestrateur d'événement mis en oeuvre par matériel (152) qui est exécuté par le au moins un processeur matériel, une notification reliée à l'évènement ;

dans lequel l'UV est un véhicule aérien sans pilote (UAV).

**12.** Procédé (300) pour une commande de mouvement et une gestion des données d'un UV selon la revendication 11, consistant en outre à :

générer, par un analyseur de service de temps et d'emplacement mis en oeuvre par matériel (144) qui est exécuté par le au moins un processeur matériel, en fonction des métadonnées de mouvement et de statut, un modèle d'un état de l'UV pendant le mouvement de l'UV.

**13.** Procédé pour une commande de mouvement et une gestion des données d'un UV selon la revendication 11 ou 12, consistant en outre à :

extraire, par un intégrateur de flux mis en oeuvre par matériel (146) qui est exécuté par le au moins un processeur matériel, une trame de données du flux de données non formatées ; et

prétraiter, par l'intégrateur de flux (146), les données du flux de données non formatées pour détecter une fuite dans un pipeline en passant la trame des données à travers un regroupement à base de valeurs de saturation de teinte (HSV) pour segmenter un environnement en chartes de couleurs distinctes, dans lequel la fuite dans le pipeline est détectée en utilisant une transformation pour extraire le pipeline couvrant la trame.

**14.** Procédé (300) pour une commande de mouvement et une gestion des données d'un UV selon l'une quelconque des revendications 11 à 13, consistant en outre à :

utiliser, par l'analyseur de données de flux TLC (148), une approximation de la chaîne Teh-Chin pour extraire une tache qui représente la fuite dans le pipeline ; et

utiliser de préférence, par l'analyseur de données de flux TLC (148), un classifieur bayésien naïf pour classer la tache comme une fuite ou non.

**15.** Support non transitoire lisible par ordinateur y ayant stocké des instructions lisibles par machine pour une commande de mouvement et une gestion de données d'un UV, dans lequel les instructions lisibles par machine, lorsqu'exécutées, amènent au moins un processeur matériel à effectuer des opérations selon le procédé de la revendication 11.

UNMANNED VEHICLE
MOVEMENT AND DATA CONTROL SYSTEM
100

MISSION CONTROLLER 102

UV 104

SENSOR 106

MISSION
PLANNING
CONTROLLER
120

MOVEMENT PLANNING
CONTROLLER
122

UV DATA RECEIVER
124

108

NETWORK

118

FLEET AND
MISSION
OPERATIONS
CONTROLLER
110

MISSION
MANAGER
112

EVENT
DETECTOR
116

FIG. 1

**FIG. 2**

300

RECEIVE FORMATTED MOVEMENT AND STATUS
METADATA FROM AT LEAST ONE SENSOR OF A
UV DURING MOVEMENT OF THE UV
302

RECEIVE AN UNFORMATTED DATA
STREAM FROM THE AT LEAST ONE
SENSOR OF THE UV
304

INJECT THE TIME AND LOCATION INFORMATION INTO
METADATA OF THE UNFORMATTED DATA STREAM TO
GENERATE A TIME AND LOCATION CORRELATED (TLC) STREAM
306

ANALYZE THE TLC STREAM TO IDENTIFY AN EVENT
RELATED TO THE UV
308

# FIG. 3

400

RECEIVE JAVASCRIPT OBJECT NOTATION
(JSON) FORMAT MOVEMENT AND STATUS
METADATA FROM AT LEAST ONE SENSOR OF A
UV DURING MOVEMENT OF THE UV
402

RECEIVE AN UNFORMATTED DATA STREAM FROM THE
AT LEAST ONE SENSOR OF THE UV
404

INJECT THE TIME AND LOCATION INFORMATION INTO
METADATA OF THE UNFORMATTED DATA STREAM TO
GENERATE A TIME AND LOCATION CORRELATED (TLC) STREAM
406

ANALYZE THE TLC STREAM TO IDENTIFY AN EVENT
RELATED TO THE UV
408

GENERATE A NOTIFICATION RELATED TO THE EVENT
410

FIG. 4

500

MEMORY
506

UNMANNED VEHICLE
(UV) MOVEMENT AND
DATA CONTROLLER
520

PROCESSOR
502

504

SECONDARY
DATA STORAGE
508

NETWORK
INTERFACE
512

I/O
510

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61940251 A
- US 61943224 A
- US 61985415 A
- EP 2333479 A2